(19) **Europäisches Patentamt**

**European Patent Office**

**Office européen des brevets**

(11) Veröffentlichungsnummer : **0 337 128 B1**

## (12) EUROPÄISCHE PATENTSCHRIFT

(45) Veröffentlichungstag der Patentschrift :
**02.01.92 Patentblatt 92/01**

(21) Anmeldenummer : **89104351.5**

(22) Anmeldetag : **11.03.89**

(51) Int. Cl.⁵ : **F16L 41/08**

---

**(54) Anschlussarmatur für Rohrleitungen.**

---

(30) Priorität : **13.04.88 DE 3812249**

(43) Veröffentlichungstag der Anmeldung :
**18.10.89 Patentblatt 89/42**

(45) Bekanntmachung des Hinweises auf die
Patenterteilung :
**02.01.92 Patentblatt 92/01**

(84) Benannte Vertragsstaaten :
**DE FR GB IT NL SE**

(56) Entgegenhaltungen :
**DE-A- 3 235 125**
**DE-U- 8 322 203**
**LU-A- 66 895**
**US-A- 4 396 213**
**US-A- 4 498 691**

(73) Patentinhaber : **ARMATURENFABRIK
HERMANN VOSS GMBH & CO.
Leiersmühle 2-6
W-5272 Wipperfürth (DE)**

(72) Erfinder : **Rösch, Volker, Dr.
Elsenborner Weg 37
W-4330 Mülheim (Ruhr) (DE)**

(74) Vertreter : **Patentanwälte Dr. Solf & Zapf
Schlossbleiche 20 Postfach 13 01 13
W-5600 Wuppertal 1 (DE)**

## Beschreibung

Die vorliegende Erfindung betrifft eine Anschlußarmatur, insbesondere für Polyamid-Rohrleitungen, bestehend aus einem Einschraubkörper mit Außengewinde und einem in dessen Durchgangsbohrung dichtend in Richtung der Armaturlängsachse formschlüssig montierbaren Anschlußteil mit angeformten Einschlagdorn, der in die Rohrleitung einpreßbar ist.

Eine derartige Anschlußarmatur ist beispielsweise aus der DE-A-3235125 bekannt. Hierbei sind rastende Federarme an einem Einsteckteil vorgesehen, die eine Ringfläche am Einschraubkörper in eingestecktem Zustand des Steckerteils hintergreifen und mittels eines Federelementes zwischen Einschraubkörper und Steckerteil unter Anlage an dem Einschraubkörper gehalten werden.

Eine derartige Anschlußarmatur hat Nachteile bei der Herstellung von konfektionierten Rohrleitungen mit kompletten Anschlußarmaturen, da es hierzu erforderlich ist, daß die Anschlußarmatur vor dem Eindrehen des Einschraubkörpers in beispielsweise eine Gewindebohrung eines Ventilgehäuse bereits mit der relativ starren Rohrleitung verbunden wird. Durch die federnde, nachgiebige Anlage zwischen dem Einschraubkörper und dem Steckerteil ergeben sich aber Schwierigkeiten bei dieser Vormontage. Weiterhin beeinträchtigt die Anlage unter Vorspannung die freie Verdrehbarkeit zwischen Steckerteil und Einschraubkörper.

Der Erfindung liegt die Aufgabe zugrunde, ausgehend von einer Anschlußarmatur der eingangs beschriebenen Art, diese derart zu verbessern, daß eine einfache Vormontage von kompletten Armaturen möglich ist und eine freie Verdrehbarkeit der Armaturenteile zueinander in jedem Montagezustand gegeben ist.

Erfindungsgemäß wird dies dadurch erreicht, daß der Einschraubkörper mit dem montierten Anschlußteil unlösbar in Richtung der Längsachse formschlüssig derart verbunden ist, daß das Anschlußteil und der Einschraubkörper relativ zueinander frei verdrehbar gelagert sind.

Durch die vorliegende Erfindung wird demnach eine universelle Anschlußarmatur geschaffen, die das Konstruktionsmerkmal eines Einschlagdorns mit der Verwendbarkeit der Anschlußarmatur bei Norm-Gewindebohrungen in Gehäusen verbindet. Zudem ist die Anschlußarmatur im vormontierten Zustand, wenn das Anschlußteil bereits in dem Einschraubkörper enthalten ist, leicht handhabbar, und die beiden Teile sind verliersicher miteinander verbunden. Hierbei ist eine freie Verdrehbarkeit des Anschlußteils mit dem angeformten Dorn gegenüber dem Einschraubteil gewährleistet. Diese freie Verdrehbarkeit bleibt auch im angezogenen Zustand, d.h. wenn das Einschraubteil in ein Gehäuse eingeschraubt ist, erhalten.

Vorteilhafte Ausführungsformen der Erfindung sind in den Unteransprüchen enthalten. Anhand der in den beiliegenden Zeichnungen dargestellten Ausführungsbeispiele wird die Erfindung näher erläutert. Es zeigen :

| | |
|---|---|
| Fig. 1 | einen Teilschnitt durch eine erfindungsgemäße Anschlußarmatur im eingedrehten Zustand in einem Gehäuse, |
| Fig. 2 bis 7 | Teilschnitte durch alternative Ausführungsformen einer erfindungsgemäßen Anschlußarmatur, |
| Fig. 8 | eine perspektivische Teilansicht eines Einschraubkörpers einer weiteren erfindungsgemäßen Anschlußarmatur. |

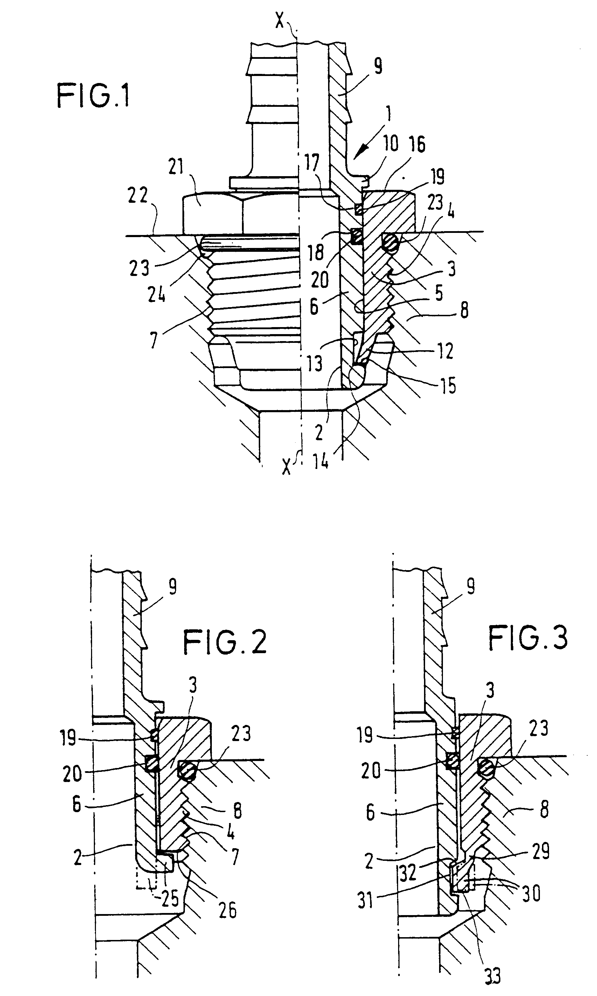

Wie sich aus Figur 1 ergibt, besteht eine erfindungsgemäße Anschlußarmatur aus einem Anschlußteil 1 mit einer Durchgangsbohrung 2 und einem Einschraubkörper 3 mit einem Außengewinde 4 und einer Durchgangsbohrung 5 zur Aufnahme eines Zapfens 6 des Teils 1. Der Einschraubkörper 3 ist in eine Gewindebohrung 7 eines Gehäuses 8 eingeschraubt bzw. einschraubbar. Das Gehäuse 8 kann beispielsweise Teil eines Ventilgehäuses sein. Am oberen Ende des Zapfens 6 ist ein Einschlagdorn 9 ausgebildet, so daß das Anschlußteil aus dem Einschlagdorn 9 und dem Zapfen 6 besteht. Bei dem dargestellten Ausführungsbeispiel der Erfindung ist am Übergang vom Einschlagdorn 9 zum Zapfen 6 ein umlaufender, ringförmiger Ansatz 10 ausgebildet, der als Anschlag dient. Am innerhalb der Gewindebohrung 7 liegenden Ende des Einschraubkörpers 3 ist ein ringförmiger Bördelabschnitt 12 angeformt, dessen Wandstärke gegenüber der des Einschraubkörpers 3 wesentlich verringert ist, wobei etwa die Wandstärke des Bördelkörpers 12 ca. 30% der Wandstärke des Einschraubkörpers 3 beträgt. Im montierten Zustand des Zapfens 6 innerhalb der Durchgangsbohrung 5 des Einschraubkörpers 3 ragt der Bördelkörper 12 in eine umlaufende Ringnut 13 am Umfang des Zapfens 6 hinein. Die in Montagerichtung vordere senkrechte Ringnutfläche 14 dient hierbei als Anschlag für die Stirnfläche 15 des Bördelskörpers 12.

Die erfindungsgemäße Ausgestaltung des Einschraubkörpers 3 mit dem endseitigen Bördelkörper 12 erlaubt es, daß vor der Verbindung des Einschraubkörpers 3 mit dem Zapfen 6 der Bördelkörper 12 mit der Innenwandung der Durchgangsbohrung 5 fluchtet. Nachdem der Zapfen in die Durchgangsbohrung 5 hineingesteckt worden ist, und zwar bis er mit dem ringförmigen Ansatz 10 gegen die obere Stirnfläche 16 des Einschraubkörpers 3 anschlägt, wird der Bördelkörper 12 mit Hilfe eines entsprechenden Werkzeuges derartig radial nach innen auf den Zapfen 6 zu verformt, daß er mit seinem Ende in die gegenüberliegende Ringnut 13 hineinragt, so daß er einen spitzen Winkel mit der Längsachse X-X der erfindungsgemäßen Anschlußarmatur bildet. Aufgrund dieser Verformung des Bördelkörpers 12 wird eine formschlüssige Verbindung in Richtung der Längsachse X-X zwischen dem Einschraubkörper 3 und dem Anschlußteil 1 erreicht, und zwar bedingt einerseits durch den ringförmigen Ansatz 10 und andererseits durch die Anschlagbegrenzung zwischen der Ringnutendfläche 14 und der Stirnfläche 15 des Bördelkörpers 12. Hierbei ist jedoch die Verformung des Bördelkörpers 12 in Richtung auf den Zapfen 6 derart, daß eine freie Drehbarkeit zwischen dem Einschraubkörper 3 und dem Zapfen 6 gegeben ist. Die Abdichtung zwischen dem Anschlußteil 1 und dem Einschraubkörper 3 erfolgt durch zwei übereinander angeordnete O-Ringdichtungen, die zwischen dem ringförmigen Ansatz 10 und der Ringnut 13 angeordnet sind, und zwar vorzugsweise innerhalb von Ringnuten 17, 18 im Zapfen 6. Dabei dient die obere O-Ringdichtung 19 innerhalb der Ringnut 17 als Schmutzdichtung, und die untere O-Ringdichtung 20 innerhalb der Ringnut 18 dient als Abdichtung für das Druckmedium. Durch dieses erfindungsgemäße Zwei-O-Ringsystem ist es möglich, eine optimale Abdichtung auf einfache Weise zu erreichen, wobei durch die Aufteilung der Dichtfunktionen auf zwei getrennte O-Ringe, der als Schmutzsicherung dienende O-Ring 19 im Querschnitt kleiner ausgebildet sein kann als der die Abdichtung des Druckmediums bewirkende O-Ring 20. Bei der formschlüssigen Verbindung zwischen dem Anschlußteil 1 und dem Einschraubkörper 3 handelt es sich um eine unlösbare Verbindung der beiden Teile zueinander. Wie weiterhin aus Figur 1 zu erkennen ist, weist der Einschraubkörper 3 vorzugsweise einen aus der Gewindebohrung 7 herausragenden, als Außensechskant ausgebildeten Kopf 21 auf, wobei der Einschraubkörper bis zum Anschlag des Kopfes 21 an der Gehäuseoberseite 22 in die Gewindebohrung 7 eingedreht ist. Die Abdichtung des Einschraubkörpers 3 gegenüber dem Gehäuse 8 erfolgt mittels eines Dichtringes 23, der innerhalb einer Ringnut 24 angeordnet ist, die am Übergang der Gewindebohrung 7 zur Oberfläche 22 ausgebildet ist. Dabei ist der Dichtring 23 derart dimensioniert, daß eine Verformung im eingeschraubten Zustand der Einschraubmutter derart erfolgt, daß der Ringspalt zwischen dem Einschraubkörper 3 und dem Gehäuse 8 vollständig abgedichtet wird.

Durch die vorstehend beschriebene erfindungsgemäße Ausgestaltung ist es möglich, das Anschlußteil 1 im Einschraubkörper 3 vorzumontieren, so daß das Anschlußteil 1 mit dem Einschraubkörper 3 unverlierbar verbunden ist. Die derartig vormontierte erfindungsgemäße Anschlußarmatur kann nunmehr über den Einschlagdorn 9 mit einer Rohrleitung verbunden werden, in deren Ende die erfindungsgemäße Anschlußarmatur mit dem Einschlagdorn eingepreßt wird. Dabei ist die Verbindung zwischen der vorzugsweise aus Polyamid bestehenden Rohrleitung derart, daß eine kraftschlüssige Verbindung gegeben ist, die eine Verdrehung des Einschlagdorns innerhalb der Rohrleitung nicht mehr erlaubt. Bei dem verwendeten Polyamid-Kunststoffrohr handelt es sich um ein halbstarres Kunststoffrohr. Da das Anschlußteil somit an dem Rohr fixiert ist, so daß keine Verdrehung des Anschlußteils mehr möglich ist, kann aber aufgrund der erfindungsgemäßen Verbindung zwischen dem Einschraubkörper 3 und dem Anschlußteil 1 nunmehr die derart vorkonfektionierte Rohrleitung mit der erfindungsgemäßen Anschlußarmatur mit dem Gehäuse 8 verbunden werden, indem der Einschraubkörper 3 in die Gewindebohrung 7 des Gehäuses 8 eingeschraubt wird. Die erfindungsgemäße Ausgestaltung der Anschlußarmatur ermöglicht es auch, daß die Anschlußarmatur aus dem Gehäuse 8 wieder herausgedreht werden kann, ohne daß hierdurch eine Verdrehung der Rohrleitung erfolgt. Mit der erfindungsgemäßen Anschlußarmatur ist somit eine Vorkonfektionierung von Rohrleitungen mit kompletten Anschlußarmaturen, insbesondere für Rohrleitungen, die als Nutzfahrzeugbremsleitungen oder dergleichen Verwendung finden, möglich, so daß die mit der erfindungsgemäßen Anschlußarmatur vorkonfektionierten Rohrleitungen im Fließbandtakt an die Ventilgehäuse angeschlossen werden können.

In den folgenden Figuren 2 bis 7 sind alternative Ausführungsformen zum Erreichen einer formschlüssigen Verbindung zwischen dem Anschlußteil 1 und dem Einschraubkörper 3 dargestellt, wobei gleiche Teile wie in der Figur 1 mit denselben Bezugsziffern versehen sind.

In Figur 2 wird die formschlüssige Verbindung zwischen dem Anschlußteil 1 und dem Einschraubkörper 3 dadurch erreicht, daß wiederum, wie in Figur 1, ein oberer ringförmiger Ansatz 10 am Anschlußteil ausgebildet ist und am unteren Ende des Anschlußteils der Zapfen 6 ein Bördelteil 25 als Fortsatz aufweist. Dieser Bördelfortsatz 25 fluchtet mit dem übrigen Zapfen 6, wie gestrichelt eingezeichnet ist, im unverbundenen Zustand von Einschraubkörper 3 und Anschlußteil 1. Nach dem Einstecken des Anschlußteils 1 mit dem Zapfen 6 in den Einschraubkörper 3 bis zum Anschlag an den ringförmigen Ansatz 10 wird der Bördelfortsatz 25 etwa rechtwinklig radial nach außen mit einem entsprechenden Werkzeug umgebördelt, so daß er an der Stirnfläche 26 des Einschraubkörpers 3 anliegt. Somit ist wiederum erfindungsgemäß ein Formschluß zwischen Anschlußteil 1 und Einschraubkörper 3 in axialer Richtung gegeben. Hierbei ist die Verdrehbarkeit zwischen Einschraubkörper 3 und Anschlußteil 1 gewährleistet.

Bei der in Figur 3 dargestellten Ausführungsform ist kein ringförmiger Ansatz 10 am Anschlußteil ausgebildet. Hier weist der Einschraubkörper 3 an seinem innerhalb der Gewindebohrung 7 liegenden Ende einen Quetschfortsatz 28 auf. Dieser Quetschfortsatz 28 wird von einem Ringsteg 29 im Anschluß an den Gewindeabschnitt des Einschraubkörpers 3 sowie einem endseitigen Quetschkopf 30 gebildet, der gegenüber dem Ringsteg 29 radial auf den Zapfen 6 hin verbreitet ist. Im nicht verbundenen Zustand von Anschlußteil 1 und Einschraubkörper 3 stellt der Quetschfortsatz 28 eine geradlinige Verlängerung des Gewindeteils des Einschraubkörpers 3 dar, wie dies in Figur 3 gestrichelt eingezeichnet ist. Um eine formschlüssige Verbindung zwischen dem Einschraubkörper 3 und dem Anschlußteil 1 herzustellen, wird der Quetschfortsatz 28 mit einem geeigneten Werkzeug derart im Bereich seines Ringsteges 29 plastisch verformt, daß der Quetschkopf 30 innerhalb einer Ringnut 31 am Umfang des Zapfens 26 liegt, wobei die jeweiligen radialen Endflächen der Ringnut 31 als Anlageflächen für die korrespondierenden radialen Anlageflächen 32, 33 am Quetschkopf 30 dienen. Hierdurch wird die erfindungsgemäße Formschlußverbindung in Längsrichtung zwischen Einschraubkörper 3 und Anschlußteil 1 bewirkt, wobei die freie Verdrehbarkeit der beiden Teile zueinander gleichzeitig gewährleistet ist. Auch hier handelt es sich um eine unlösbare Verbindung zwischen Anschlußteil 1 und Einschraubkörper 3.

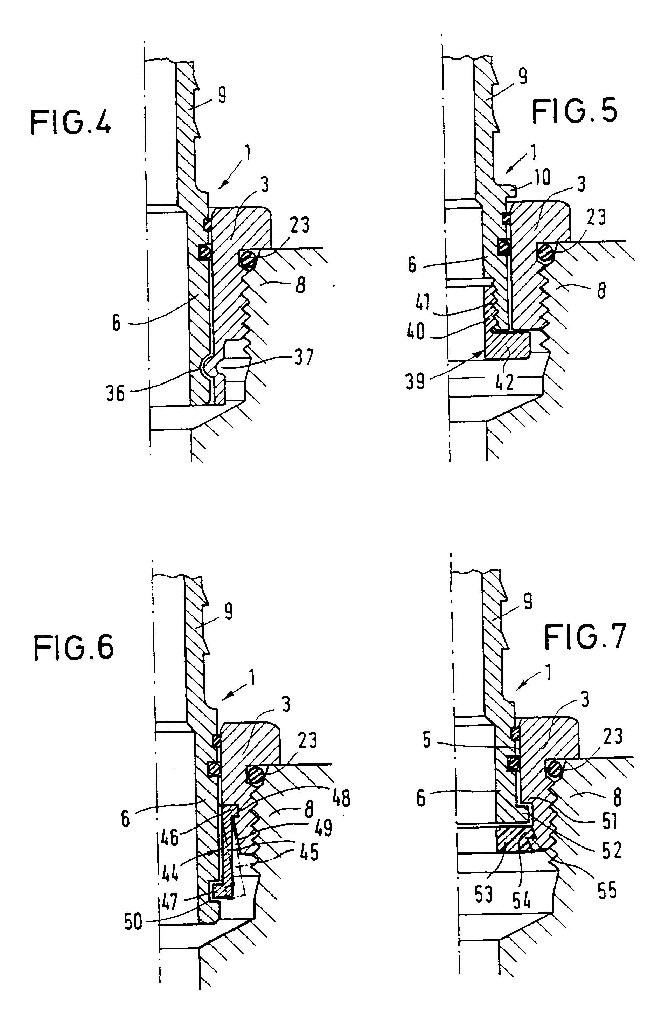

In Figur 4 ist eine alternative Ausführungsform zu der Ausführungsform gemäß Figur 3 gezeigt. Auch hier ist wiederum kein ringförmiger Ansatz 10 vorgesehen. Der Einschraubkörper 3 weist einen ringstegförmigen Fortsatz 35 auf, der im unverformten Zustand geradlinig in Fortsetzung der Innenwandung der Durchgangsbohrung 5 verläuft und eine gegenüber der Wandstärke des Gewindebereichs des Einschraubkörpers 3 reduzierte Wandstärke besitzt, so daß er durch ein Quetschwerkzeug verformbar ist. Innerhalb des Zapfens 6 ist eine umlaufende Ringnut 36 ausgebildet, die im dargestellten Ausführungsbeispiel ein kreisbogenförmiges Nutprofil aufweist. Um eine formschlüssige Verbindung zwischen dem Anschlußteil 1 und dem Einschraubkörper 3 zu erreichen, wird nun mit einem geeigneten Werkzeug von außen in den ringstegförmigen Fortsatz 35 eine Sicke 37 im Bereich der Ringnut 36 eingepreßt, wodurch der ringstegförmige Fortsatz 35 im Bereich der Sicke 37 in die Ringnut 36 formschlüssig hineingedrückt wird, wodurch eine plastische Verformung des Fortsatzes 35 in diesem Bereich erzielt wird.

In Figur 5 ist eine alternative Ausführungsform zu der Ausführungsform gemäß Figur 2 gezeigt. Hierbei ist ein ringförmiger Ansatz 10 am Anschlußteil wieder vorgesehen. Um eine Formschlußverbindung zwischen dem Anschlußteil 1 und dem Einschraubkörper 3 zu erreichen, wird nach dem Einstekken des Anschlußteils 1 mit seinem Zapfen 6 in die Durchgangsbohrung 5 des Einschraubkörpers 3 in das freie Ende des Zapfens 6 in dessen Durchgangsbohrung 2 ein Anschlagkörper 39 eingeschraubt, der aus einem Gewindeansatz 40 mit einem Außengewinde besteht, mit dem der Anschlagkörper 39 in ein Innengewinde 41 der Durchgangsbohrung 2 eingeschraubt wird. Als Fortsetzung des Gewindeansatzes 40 nach außen weist der Anschlagkörper 39 einen Anschlagkragen 42 auf, der radial nach außen vorsteht und dessen Außendurchmesser größer ist als der Innendurchmesser der Durchgangsbohrung 5 des Einschraubkörpers 3. Durch diese erfindungsgemäße Ausgestaltung wird der Einschraubkörper 3 zwischen dem ringförmigen Ansatz 10 und dem Anschlagkragen 42 in Längsrichtung formschlüssig eingeschlossen, so daß hierdurch die erfindungsgemäße formschlüssige Verbindung zwischen Anschlußteil 1 und Einschraubkörper 3 erreicht wird. Hierbei ist die freie Drehbarkeit zwischen diesen beiden Teilen gewährleistet.

In Figur 6 ist eine weitere Ausführungsform einer erfindungsgemäßen Anschlußarmatur dargestellt. Hierbei ist wiederum kein ringförmiger Ansatz erforderlich. Die formschlüssige Verbindung zwischen dem Anschlußteil 1 und dem Einschraubkörper 3 wird hier durch ein diese beiden Teile verbindendes Quetschteil 44 bewirkt. Dieses Quetschteil 44 besteht aus einem mittleren hohlzylindrischen Abschnitt 45, der den Zapfen 6 umgibt. An den beiden Enden des hohlzylindrischen Abschnitts 45 sind jeweils im Querschnitt etwa rechteckige, umlaufende, radial abstehende Ansätze 46, 47 ausgebildet. Hierbei dient der nach außen abstehende, radiale Ansatz 46 zum Fixieren des Quetschteils 44 in dem Einschraubkörper 3. Hierzu ist der radiale Ansatz 46 in eine an der Innenseite des Einschraubkörpers 3 eingeformte Ringnut 48 klemmend eingesetzt. Vor der Verbindung des Anschlußteils 1 mit dem Einschraubkörper 3 über das Quetschteil 44 verläuft der hohlzylindrische Abschnitt 45 des Quetschteils 44 ausgehend vom radialen Ansatz 46 schräg zur Längsachse der Anschlußarmatur, wie dies in Figur 6 gestrichelt eingezeichnet ist, so daß die vom radialen Ansatz 47 umschlossene Öffnung einen größeren Durchmesser besitzt als die vom radialen Ansatz 46 eingeschlossene Öffnung des Quetschteils 44. In dieser Vormontagestellung des Quetschteils 44, wenn dieses in dem Einschraubkörper 3 eingesetzt ist, liegt der Abschnitt 45 mit seiner Umfangsfläche gegen eine Anlagefläche 49 an der Innenseite des Einschraubkörpers 3 an, die sich von der Ringnut 48 zur Stirnendfläche 49 des Einschraubkörpers 3 erstreckt, wodurch eine Verjüngung der Wandung des Einschraubkörpers 3 in Richtung auf dessen Ende entsteht. Nach dem Einstecken des Zapfens 6 in die Durchgangsbohrung 5 des Einschraubkörpers 3 wird das Quetschteil 44 durch plastische Verformung des hohlzylindrischen Abschnitts 45 in eine etwa mit der Durchgangsbohrung 5 fluchtende Lage mit dem inneren radialen Ansatz 47 in eine Umfangsnut 50 des Zapfens gequetscht, so daß hier zwischen dem radialen Ansatz 47 und der Umfangsnut eine Formschlußverbindung in Längsachse X-X erreicht wird, wobei jedoch die Verdrehbarkeit des Anschlußteils 1 innerhalb des Einschraubkörpers 3 erhalten bleibt.

Das Quetschteil 44 kann als separates Teil aus einem anderen Material als das Anschlußteil und/oder der Einschraubkörper 3 hergestellt sein. So kann beispielsweise das Quetschteil 44 aus einem passenden Kunststoffmaterial hergestellt sein.

In Figur 7 ist eine weitere alternative Ausführungsform für die Formschlußverbindung zwischen dem Anschlußteil 1 und dem Einschraubkörper 3 dargestellt. Hierbei weist der Einschraubkörper 3 einen radialen Absatz 51 im Sinne einer Durchmesservergrößerung der Durchgangsbohrung 5 auf. In diesen radialen Absatz 51 ragt der Zapfen 6 mit einem an seinem freien Ende angeformten radialen äußeren Ansatz 52 hinein. Damit der erfindungsgemäße Formschluß in Richtung der Längsachse zwischen Anschlußteil 1 und Einschraubkörper 3 erzielt wird, wird von unten in die Öffnung der Durchgangsbohrung 5 ein ringförmiges Verschlußteil 53 eingeklipst. Hierzu weist das Verschlußteil 53 an seiner Umfangsfläche Rastvorsprünge 54 auf. Diese Rastvorsprünge 54 rasten in entsprechende rillenförmige Rastausnehmungen 55 an der Innenseite der Durchgangsbohrung 5 ein. Das Verschlußteil 53 kann vorzugsweise aus einem passenden Kunststoffmaterial hergestellt sein. Auch bei dieser Ausführungsform ist wiederum kein ringförmiger Ansatz für die Formschlußverbindung erforderlich.

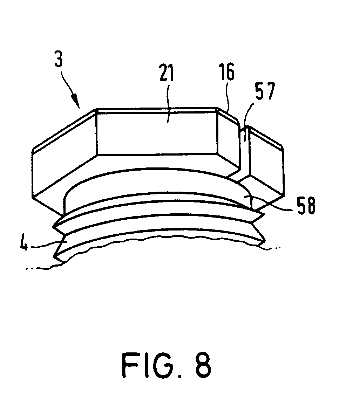

In Fig. 8 ist ein Einschraubkörper 3 einer weiteren Ausführungsform der erfindungsgemäßen Anschlußarmatur dargestellt. Dieser Einschraubkörper 3 weist im Bereich seines Kopfes 21 einen Längsschlitz 57 auf, der sich von der oberen Stirnfläche 16 bis zu einer Ringnut 58 vor dem Gewindeabschnitt erstreckt. Es liegt ebenfalls im Rahmen der Erfindung mehrere am Umfang des Kopfes 21 verteilte Längsschlitze 57 vorzusehen. Im Falle der Verwendung eines derartigen geschlitzten Einschraubkörpers 3 ist der durch die O-Ring-Dichtungen 19, 20 definierte Abdichtungsbereich derart angeordnet, daß er außerhalb des geschlitzten Bereichs des Einschraubkörpers liegt. Durch die Verwendung des geschlitzten Einschraubkörpers kann das Anschlußteil 1 im Bereich des Zapfens 6 innerhalb der Anschlußarmatur in eine bestimmte Drehstellung des Anschlußteils 1 durch eine mit dem Einschraubkörper 3 erzielte Klemmwirkung fixiert werden. Die Klemmwirkung wird durch Anziehen des Einschraubkörpers 3 über seine Anschlaglage hinaus erreicht, wobei dann eine Verformung des Einschraubkörpers im geschlitzten Kopfbereich erfolgt, und dieser in der Art einer Spannzange wirkt. Bei der Verformung des erfindungsgemäßen Einschraubkörpers 3 handelt es sich um eine elastische Verformung, so daß durch Herausdrehen des Einschraubkörpers die Klemmwirkung aufgehoben werden kann.

## Patentansprüche

1. Anschlußarmatur, insbesondere für Polyamid-Rohrleitungen, bestehend aus einem Einschraubkörper mit Außengewinde (4) und einem in dessen Durchgangsbohrung (5) dichtend in Richtung der Armaturlängsachse formschlüssig montierbaren Anschlußteil (1) mit angeformtem Einschlagdorn (9), der in die Rohrleitung einpreßbar ist, **dadurch gekennzeichnet**, daß der Einschraubkörper (3) mit dem montierten Anschlußteil (1) unlösbar derart verbunden ist, daß das Anschlußteil (1) und der Einschraubkörper (3) relativ zueinander frei verdrehbar gelagert sind.

2. Anschlußarmatur nach Anspruch 1, **dadurch gekennzeichnet**, daß die Formschlußverbindung aus einem ringförmigen Ansatz (10) am Übergang zwischen einem Zapfen (6) des Anschlußteils (1) und dem Einschlagdorn (9) besteht, der im eingesteckten Zustand des Anschlußteils (1) unmittelbar oberhalb der oberen Stirnfläche des Einschraubkörpers (3) angeordnet ist und einem am freien Ende des Zapfens (6) ausgebildeten, radial nach außen abstehenden Fortsatz (25, 42), dessen Außendurchmesser größer ist als der Innendurchmesser einer Durchgangsbohrung (5) des Einschraubkörpers (3).

3. Anschlußarmatur nach Anspruch 2, **dadurch gekennzeichnet**, daß der radial nach außen stehende Fortsatz von einem umgebördelten, am freien Ende des Zapfens (6) angeformten Bördelteil (25) gebildet wird oder von einem Anschlagkragen (42) eines in ein Innengewinde der Durchgangsbohrung (2) des Anschlußteils (1) eingeschraubten Anschlagkörpers (39).

4. Anschlußarmatur nach Anspruch 1, **dadurch gekennzeichnet**, daß die Formschlußverbindung aus einem ringförmigen Ansatz (10) zwischen dem Zapfen (6) und dem Einschlagdorn (9) gebildet wird, der im eingesteckten Zustand des Anschlußteils (1) unmittelbar oberhalb der Stirnfläche (16) des Einschraubkörpers (3) liegt, sowie aus einem am freien Ende des Einschraubkörpers (3) ausgebildeten Bördelkörpers (12), mit einer geringeren Wandstärke als der Gewindeabschnitt des Einschraubkörpers (3), der durch plastische Verformung in eine Ringnut (13) am Umfang des Zapfens (6) hineinragt und mit seiner Stirnfläche (15) mit der in Einsteckrichtung vorderen Ringnutfläche (14) der Ringnut (13) als Anschlag zusammenwirkt.

5. Anschlußarmatur nach Anspruch 1, **dadurch gekennzeichnet**, daß die Formschlußverbindung aus einer am Umfang des Zapfens (6) ausgebildeten Ringnut (31, 36) gebildet wird, in die ein durch plastische Verformung eingedrückter Formschlußfortsatz des Einschraubkörpers (3) eingeformt ist.

6. Anschlußarmatur nach Anspruch 5, **dadurch gekennzeichnet**, daß der Formschlußfortsatz aus einem

5

am freien Ende des Einschraubkörpers (3) angeformten Ringsteg (29) gebildet ist, an dessen Ende ein Quetschkopf (30) ausgebildet ist, der formmäßig der Ringnut (31) angepaßt ist.

7. Anschlußarmatur nach Anspruch 6, **dadurch gekennzeichnet**, daß der Formschlußfortsatz von einem ringstegförmigen Fortsatz (35) gebildet ist, der mit einem durch eine Sicke (37) gebildeten Vorsprung in die Ringnut (36) formschlüssig hineinragt.

8. Anschlußarmatur nach Anspruch 1, **dadurch gekennzeichnet**, daß die Formschlußverbindung durch ein innerhalb der Durchgangsbohrung (5) des Einschraubkörpers (3) befestigtes Quetschteil (44) erfolgt, das einen hohlzylindrischen Abschnitt (45) in Verlängerung des Einschraubkörpers (3) aufweist, der mit einem endseitigen, nach innen ragenden, radialen Ansatz (47) in eine Ringnut (48) des Zapfens (6) formschlüssig durch plastische Verformung des hohlzylindrischen Abschnitts (45) hineinragt.

9. Anschlußarmatur nach Anspruch 1, **dadurch gekennzeichnet**, daß die Formschlußverbindung durch einen am freien Ende des Zapfens (6) ausgebildeten, radialen Ansatz (52) gebildet wird, der formschlüssig in einer Innennut des Einschraubkörpers (3) gehalten wird, die aus einem radialen Ansatz (51) des Einschraubkörpers (3) sowie einer in die Öffnung der Durchgangsbohrung (5) rastend eingesteckten Verschlußscheibe (53) gebildet wird.

10. Anschlußarmatur nach einem oder mehreren der Ansprüche 1 bis 9, **dadurch gekennzeichnet**, daß die Armatureinzelteile aus Metall gefertigt sind.

11. Anschlußarmatur nach einem oder mehreren der Ansprüche 1 bis 10, **dadurch gekennzeichnet**, daß die Dichtung zwischen dem Einschraubkörper (3) und dem Anschlußteil (1) aus einer Doppel-O-Ringdichtung (17, 18, 19, 20) gebildet ist.

12. Anschlußarmatur nach einem oder mehreren der Ansprüche 1 bis 11, **dadurch gekennzeichnet**, daß der Einschraubkörper (3) derart im Sinne einer Durchmesserverringerung seines Bohrungsdurchmessers elastisch verformbar ist, daß eine Klemmwirkung in bezug auf das Anschlußteil (1) erreicht wird.

13. Anschlußarmatur nach Anspruch 12, **dadurch gekennzeichnet**, daß der Einschraubkörper (3) im Bereich seines Kopfes (16) mindestens einen vor dem Außengewinde (4) endenden Längsschlitz (57) aufweist.

14. Anschlußarmatur nach Anspruch 13, **dadurch gekennzeichnet**, daß der Längsschlitz (57) an einer Ringnut (58) endet.

15. Anschlußarmatur nach einem oder mehreren der Ansprüche 12 bis 14, **dadurch gekennzeichnet**, daß die Dichtungen (19, 20) außerhalb des elastisch verformbaren Bereichs des Einschraubkörpers (3) angeordnet sind.

## Claims

1. Connector fitting, in particular for polyamide pipe conduits, comprising a screw-in body with an external thread (4) and a connector part (1) which may be mounted form-fittingly in the through bore (5) of said screw-in body sealingly in the direction of the fitting longitudinal axis and has formed thereon a drive-in mandrel (9) which may be pressed into the pipe conduit, characterised in that the screw-in body (3) is non-detachably connected to the mounted connector part (1) in such a way that the connector part (1) and the screw-in body (3) are supported in a freely rotatable manner relative to one another.

2. Connector fitting according to claim 1, characterised in that the form-fitting connection comprises an annular shoulder (10), which is situated at the transition between a journal (6) of the connector part (1) and the drive-in mandrel (9) and is disposed, when the connector part (1) is inserted, directly above the upper face of the screw-in body (3), and a radially outward projecting extension (25, 42) which is formed on the free end of the journal (6) and whose external diameter is greater than the internal diameter of a through bore (5) of the screw-in body (3).

3. Connector fitting according to claim 2, characterised in that the radially outward projecting extension is formed by a beaded flange part (25) formed on the free end of the journal (6) or by a stop collar (42) of a stop body (39) which is screwed into an internal thread of the through bore (2) of the connector part (1).

4. Connector fitting according to claim 1, characterised in that the form-fitting connection is formed by an annular shoulder (10), which is situated between the journal (6) and the drive-in mandrel (9) and lies, when the connector part (1) is inserted, directly above the face (16) of the screw-in body (3), and by a flange body (12) formed on the free end of the screw-in body (3) and having a reduced wall thickness compared to the threaded portion of the screw-in body (3), said flange body as a result of plastic deformation projecting into an annular groove (13) on the periphery of the journal (6) and its face (15) acting together with the, in insert direction, front annular groove surface (14) of the annular groove (13) as a stop.

5. Connector fitting according to claim 1, characterised in that the form-fitting connection is formed by an annular groove (31, 36), which is formed on the periphery of the journal (6) and into which a form-fitting extension of the screw-in body (3), pressed in as a result of plastic deformation, is moulded.

6. Connector fitting according to claim 5, characterised in that the form-fitting extension is formed by an annular web (29), which is formed on the free end of the screw-in body (3) and has formed on its end a pinched head (30), whose shape is adapted to the annular groove (31).

7. Connector fitting according to claim 6, characterised in that the form-fitting extension is formed by an annular web-like extension (35) which engages, with a projection formed by a bead (37), in a form-fitting manner into the annular groove (36).

8. Connector fitting according to claim 1, characterised in that the form-fitting connection is effected by means of a pinched part (44) fastened inside the through bore (5) of the screw-in body (3) and having as an extension to the screw-in body (3) a hollow cylindrical portion (45), at the end of which an inwardly projecting, radial shoulder (47) projects into an annular groove (48) of the journal (6) in a form-fitting miner as a result of plastic deformation of the hollow cylindrical portion (45).

9. Connector fitting according to claim 1, characterised in that the form-fitting connection is formed by a radial shoulder (52) formed on the free end of the journal (6) and held in a form-fitting manner in an internal groove of the screw-in body (3), said groove being formed by a radial shoulder (51) of the screw-in body (3) and by a sealing washer (53) lockingly inserted into the opening of the through bore (5).

10. Connector fitting according to one or more of claims 1 to 9, characterised in that the individual parts of the fitting are made of metal.

11. Connector fitting according to one or more of claims 1 to 10, characterised in that the seal between the screw-in body (3) and the connector part (1) is formed by a double O-ring seal (17, 18, 19, 20).

12. Connector fitting according to one or more of claims 1 to 11, characterised in that the screw-in body (3) is elastically deformable in the sense of a reduction in its bore diameter in such a manner that a clamping action in relation to the connector part (1) is achieved.

13. Connector fitting according to claim 12, characterised in that the screw-in body (3) has in the region of its head (16) at least one longitudinal slot (57) terminating in front of the external thread (4).

14. Connector fitting according to claim 13, characterised in that the longitudinal slot (57) terminates at an annular groove (58).

15. Connector fitting according to one or more of claims 12 to 14, characterised in that the seals (19, 20) are disposed outside of the elastically deformable region of the screw-in body (3).

## Revendications

1. Dispositif de raccordement, en particulier pour tuyaux en polyamide, comprenant un corps pouvant se visser grâce à un filetage (4) et une pièce de raccordement (1) pouvant être montée mécaniquement avec étanchéité dans l'alésage traversant (5) du corps, dans le sens de l'axe longitudinal du dispositif, cette pièce étant munie d'un embout de raccord (9), venu de moulage, qui peut s'enfoncer dans le tuyau, caractérisé par le fait que le corps fileté (3) est relié de manière non détachable à la pièce de raccordement (1), de manière à ce que cette dernière (1) et le corps (3) puissent pivoter librement l'un par rapport à l'autre.

2. Dispositif de raccordement selon la revendication 1, caractérisé par le fait que les moyens de raccordement mécanique comportent une pièce annulaire (10) rapportée, disposée à l'endroit de transition entre un tourillon (6) de la pièce de raccordement (1) et l'embout de raccord (9), cette pièce rapportée (10) étant disposé immédiatement au-dessus de la face supérieure du corps (3) lorsque la pièce (1) est insérée, et en un prolongement (25, 42) formé à l'extrémité libre du tourillon (6) et faisant saillie radialement vers l'extérieur, le diamètre extérieur de ce prolongement étant supérieur au diamètre intérieur de l'alésage traversant (5) du corps (3).

3. Dispositif de raccordement selon la revendication 2, caractérisé par le fait que le prolongement faisant saillie radialement vers l'extérieur est constitué par une pièce rabattue (25), venue de moulage à l'extrémité libre du tourillon (6) ou bien par une collerettte de butée (42) d'un corps de butée (39) vissé dans un taraudage de l'alésage traversant (2) de la pièce (1).

4. Dispositif de raccordement selon la revendication 1, caractérisé par le fait que les moyens de raccordement mécanique comportent une pièce annulaire rapportée (10) située entre le tourillon (6) et le manchon de raccord (9), qui est située immédiatement au-dessus de la face frontale (16) du corps fileté (3) lorsque la pièce (1) est enfichée, et un rebord (12), formé à l'extrémité libre du corps (3), l'épaisseur de la paroi de celui-ci étant inférieure à la partie filetée du corps (3), ce rebord faisant saillie, grâce à une déformation plastique, dans une rainure annulaire (13) disposée sur la circonférence du tourillon (6) et coopérant par sa face frontale (15) avec la surface (14), antérieure dans la direction d'enfichage, de la rainure annulaire (13) qui sert de butée.

5. Dispositif de raccordement selon la revendication 1, caractérisé par le fait que les moyens de raccordement mécanique comportent une rainure annulaire (31, 36) formée sur la circonférence du tourillon (6) dans laquelle est venue par moulage un prolongement de raccordement mécanique du corps (3) obtenu en creux par déformation plastique.

6. Dispositif de raccordement selon la revendication 5, caractérisé par le fait que le prolongement de raccordement mécanique est constitué par une nervure annulaire (29) moulée sur l'extrémité libre du corps fileté (3), une tête d'appui (30) étant formée à l'extrémité de cette nervure dont la forme est adaptée à celle de la rainure annulaire (31).

7. Dispositif de raccordement selon la revendication 6, caractérisé par le fait que le prolongement de raccordement mécanique est constitué par un prolongement (35) ayant la forme d'une nervure annulaire dont une saillie, formée par une moulure (37), s'engage mécaniquement dans la rainure annulaire (36).

8. Dispositif de raccordement selon la revendication 1, caractérisé par le fait que le raccordement mécanique est effectué par une pièce d'appui (44) fixée dans l'alésage traversant (5) du corps (3), cette pièce présentant dans le prolongement du corps (3) une portion (45) ayant la forme d'un cylindre creux dont une partie radiale rapportée (47) d'extrémité fait saillie vers l'intérieur et s'engage mécaniquement dans une rainure annulaire (48) du tourillon (6), par déformation plastique de la portion en forme de cylindre creux (45).

9. Dispositif de raccordement selon la revendication 1, caractérisé par le fait que le raccordement mécanique est constitué par une portion radiale rapportée (52) formée à l'extrémité libre du tourillon (6), cette portion rapportée étant maintenue sans jeu dans une rainure intérieure du corps fileté (3), cette rainure étant constituée par une pièce rapportée radiale (51) du corps (3) et par un disque de fermeture (53) bloqué dans l'ouverture de l'alésage traversant (5).

10. Dispositif de raccordement selon l'une ou plusieurs des revendications 1 à 9, caractérisé par le fait que ses parties constitutives sont en métal.

11. Dispositif de raccordement selon l'une ou plusieurs des revendications 1 à 10, caractérisé par le fait que le joint entre le corps (3) et la pièce de raccordement (1) est constitué par un joint torique double (17, 18, 19, 20).

12. Dispositif de raccordement selon l'une ou plusieurs des revendications 1 à 11, caractérisé par le fait que le corps fileté (3) peut être déformé élastiquement pour réduire le diamètre de son alésage de manière à obtenir un effet de serrage en ce qui concerne la pièce (1).

13. Dispositif de raccordement selon la revendication 12, caractérisé par le fait que le corps fileté (3) présente, dans la région de sa tête (16), au moins une fente longitudinale (57) se terminant avant le filet (4).

14. Dispositif de raccordement selon la revendication 13, caractérisé par le fait que la fente longitudinale (57) se termine au voisinage d'une rainure annulaire (58).

15. Dispositif de raccordement selon l'une ou plusieurs des revendications 12 à 14, caractérisé par le fait que les joints (19, 20) sont disposés en dehors de la région du corps (3) qui peut être déformée élastiquement.

FIG.1

FIG.2

FIG.3

FIG.4

FIG.5

FIG.6

FIG.7

FIG. 8